# EUROPEAN PATENT APPLICATION

(11) **EP 1 405 765 A1**
(43) Date of publication of application: **07.04.2004**
(21) Application number: 02022027.3
(22) Date of filing: 01.10.2002
(51) Int. Cl.: B60R 13/04

(54) **Edge protector**

(71) Applicant: NMC S.A., 4731 Raeren/Eynatten (BE)
(72) Inventor: Dujardin, René, 4730 Raeren (BE); Mayeres, Jean-Pierre, 4700 Eupen (BE)
(74) Representative: Kihn, Pierre Emile Joseph

(57) **Abstract**

Disclosed is a removable edge protector (10) of polymeric material for removable installation on a vehicle door, said edge protector comprising:
- a bumper section (12),
- a planar section (14) comprising means to removably install said protector on said edge of a vehicle door, and
- a flexible mid-section (16) between said bumper section (12) and planar section (14),
- said mid-section (16) maintaining the bumper section (12) and the planar section (14) at an angle α which is between 160° and 100°.

## Description

### TECHNICAL FIELD

This invention relates generally to protective guards for surface edges. Specifically, this invention relates to an edge protector for removable installation on the edge of a vehicle door or the like.

### BACKGROUND

It is becoming increasingly time consuming and expensive to repair even minor damages to the exterior body of automotive vehicles. As a result, manufacturers are interested in protecting automotive vehicles from all types of such damages prior to the delivery of the vehicle to the final customer. This also concerns minor dents or scratches to the edges of vehicle doors, hoods, or trunks, which can occur during shipment of the vehicles.

The manufactures equip the doors or bumpers of the vehicle with a horizontal trim made of resilient material that is permanently fixed along the side of the doors of the vehicles so as to avoid dents and scratches when the doors are opened and bumped against a neighboring vehicle or another obstacle. These trims are however rather fragile and customers do not accept any damages in the paint when buying a new car.

It is therefore necessary for the manufactures to protect the body panels of the cars during the shipment from the factory to the customers. During this shipment f.ex. by truck, train or ship, the cars are parked very close to one another. On the trucks or the trains, the space between the cars and the body of the truck or the train is very narrow so that dents or scratches in the doors of the vehicle during shipment are quite frequent.

A variety of devices have been developed for permanent installation on the edge of vehicle doors or the like. These devices generally comprise a deformable metal carrier coated with rubber or plastic materials as in U.S. Pat. No. 4,581,807. These devices generally have a U-shaped cross section for receiving the edge of the vehicle door. The metal carrier is generally deformed so that the device resiliently grips the edge of the vehicle door.

These prior art devices are generally designed with metal carriers so that they may be permanently affixed to the edge of the vehicle door. They are designed for permanent installation because they are generally used as decorative trim or for installation of weather stripping around the edge of the vehicle door as in U.S. Pat. No. 4,232,081 and U.S. Pat. No. 4,902,549. Once installed, these devices are difficult to remove without damaging the edge of the vehicle door. Moreover, when used as decorative trim or for installation of weather stripping, these devices generally must be of sufficient length to cover the entire edge of the vehicle door. A further disadvantage of these edge protectors is that the doors of the vehicle have to be opened in order to install the edge protectors.

EP 1 209 034 A1 discloses an edge guard of polymeric material for removable installation on a vehicle door having a trim. The edge guard comprises a bumper section and two planar sections comprising means to removably install the guard on the edge of a vehicle door. The bumper section comprises a U-shaped tunnel conceived to bridge the trim of the vehicle door and extending over the edge of the vehicle door along the length of the edge guard.

A disadvantage of this type of edge guard is that the edge guard also covers the gap between the door and the body of the vehicle.

### SUMMARY OF THE INVENTION

It is therefore an object of the invention to provide an edge protector for a vehicle door or the like providing maximum protection at strategic locations.

The ideal edge protector for a vehicle door or the like must be capable of being rapidly installed and removed without having to open the doors of the vehicle and without damaging the edge or any other part of the vehicle door.

Furthermore, it should be possible to install the edge protector before the door is mounted onto the body of the car on the assembly line. However, since the door must be adjusted in its hinges after it has been mounted to the car, the gap between the door and the body of the car must remain visible to facilitate the adjustment of the door. This is however not possible with the above described edge protectors since they cover at least partially the edge of the vehicle doors and the gap. When the gap is covered, the adjustment of the door is more difficult.

According to the present invention, an edge protector for protection of a vehicle door or the like is disclosed.

More specifically, an edge protector of resilient polymeric material for removable installation on a vehicle door, said edge protector comprising:
- a bumper section,
- a planar section, said planar section comprising means to removably install said protector on said edge of a vehicle door and
- a flexible mid-section between said bumper section and planar section,
- said mid-section maintaining the bumper section and the planar section at an angle α which is between about 160° and about 100°,

It is understood that although the edge protector is primarily designed for the protection of the edge of a vehicle door, it can also be used to protect the bumpers and other exposed parts of body panels of vehicles.

One of the main advantages of the edge protector according to the present invention is that the bumper section is maintained at a certain angle and consequently does not touch the vehicle door and does not cover the gap between the edge of the door and the body of the car. It is thus possible to install the edge protector before the door is mounted onto the body of the car on the assembly line without impairing the adjustment of the door in its hinges. Back injuries may thus be avoided since the operator may install the edge protector on the assembly line when the door is in a raised position. The operator does not have to bend over as would be case when the edge protector is installed on the vehicle after it left the assembly line.

If the door with the edge protector is opened and touches an obstacle, the bumper section is pushed against the vehicle door and covers the edge. This is possible because the mid-section is flexible and allows the bumper section to be flattened against the door.

As long as there are no constraints on the bumper section of the edge protector, the bumper section sticks out and is not in contact with the door.

According to a first preferred embodiment said means to removably install said protector on said edge of a vehicle door comprise an adhesive material.

Preferably, said means to removably install said protector on said edge of a vehicle door comprise a double backed adhesive tape or a simple adhesive tape which has been fixed to said protector by a hot melt type of adhesive.

According to another preferred embodiment, said edge protector is formed from a resilient, low-density polymeric material. A variety of polymeric materials may be used including polyurethane, polytherephthlate, polyvinylchloride, polystyrene, polyolefines, their copolymers and mixtures thereof. Low density polyethylene foam is particularly well suited for this application.

These and other objects and advantages will be apparent after consideration of the following detailed description and drawings.

### BRIEF DESCRIPTION OF THE DRAWINGS

FIG. 1 is a cross-sectional view of the edge protector.
Fig. 2 is a picture of a vehicle comprising an edge protector installed on the edge of the vehicle door.

### DETAILED DESCRIPTION OF THE DRAWINGS

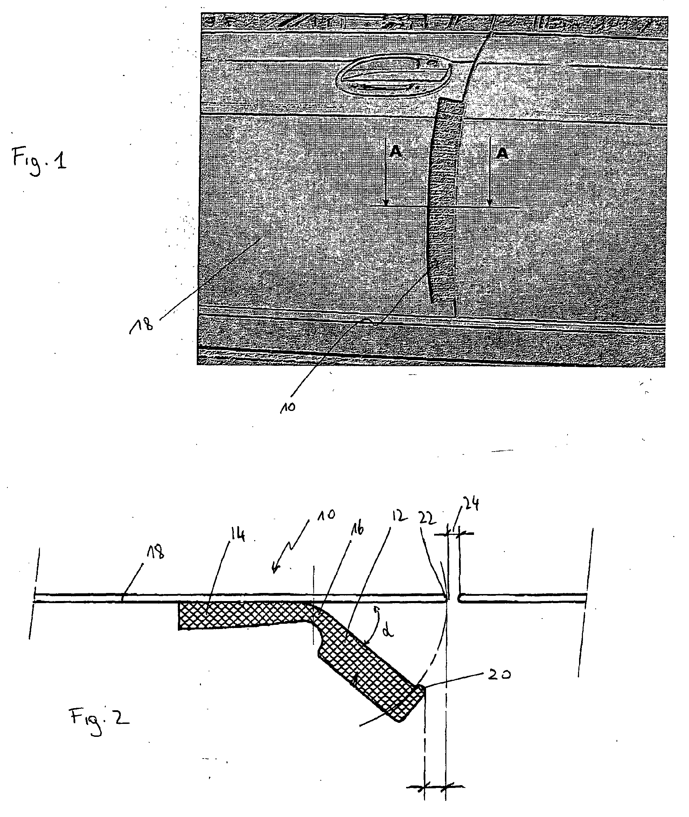

Referring now to FIG. 1 and 2, a preferred embodiment of the edge protector 10 of the present invention is pictured. The edge protector 10 comprises a bumper portion 12, a planar section 14, and a flexible mid-section 16 between said bumper section 12 and planar section 14. This flexible mid-section 16 maintains the bumper section 12 at an angle α, which is between about 160° and about 100°. In other words, the bumper section 12 is held away from the door and sticks out.

To removably install the edge protector on a door 18 of a vehicle, the planar section 14 comprises for example a double backed adhesive tape with a release paper or a hot melt type of adhesive covered by a release paper. This release paper is peeled off prior to the installation on the vehicle door.

In order to position the edge protector 10 accurately on the door 18, the bumper section 12 comprising a nose 20 along its outer edge is pushed flat against the door. The bumper section 12 is positioned in such a way that the nose 20 is situated behind the edge 22 of the door. The nose 20 serves thus as a guide to position the edge protector 10 accurately on the door 18.

When the bumper section 12 is pushed against the door, the planar section 14 sticks out and the release paper can easily be removed. The planar section is subsequently pushed against the door and adheres to the door.

The edge protector 10 is thus easily fixed to the door in such a way that in the flattened state, the bumper section 12 extends over the edge of the door and covers the gap 24 between the door and the body of the car.

Since the edge guard 10 is only fixed onto the door by the planar section 14 and since the flexible mid-section 16 as well as the bumper section 12 do not adhere to the door, the bumper section 12 will stick out and the edge 22 of the door and the gap 24 will become uncovered as soon as the edge protector is released.

If the door is opened and bumped against an obstacle, the bumper section 12 is pushed flat against the door and extends over the edge 22, wraps around the edge 22 and protects not only the exterior surface of the vehicle door but also the lateral and the interior part of the edge.

The edge protector 10 is formed from a resilient, low density foamed polymeric material. A variety of polymeric materials may be used including polyurethane, polytherephthlate, polyvinylchloride, polystyrene, polyolefines, their copolymers and mixtures thereof. The preferred embodiment of the edge protector 10 is formed from polyethylene, which provides the least damaging to the edge of the vehicle door or the like during installation and removal of the edge protector 10.

The polymeric material protector is flexible and resilient. Preferably, the polymeric material is a foam having a density of 25-35 kg/m³. The cell size of the foam is between 200 and 400 cells per cm³. The stress strain characteristic of such a foamed material is about 40% compression when a force of between 0.056 to 0.104 N/mm² is applied. The material is compressed to 50% respectively 70% of its initial thickness if a force of between 0.077 to 0.143 N/mm² respectively 0.154 to 0.286 N/mm² is applied.

The relative dimensions of the edge protector 10 are first determined by the size of the extrusion die chosen. In the preferred embodiment, the edge protector 10 has an overall length of 150 to 600 mm. The overall width of the edge protector is about 50-70mm. By placing the edge protector 10 at strategic locations along the edge of a vehicle door or the like, such a length is sufficient to provide adequate protection to the edge of a vehicle door or the like.

The edge protector is made by conventional methods. The polymeric material is extruded and foamed, the double backed adhesive tape is applied onto the planar section and the extrudent is cut or punched into predetermined lengths to create a final polymeric edge protector 10. The polymeric edge protector 10 is then ready for removable installation on an edge of a vehicle door or the like.

It is to be understood that the embodiments of this invention as shown and described are preferred examples and that the invention is not limited to the exact arrangements shown in the accompanying drawings or described in the specification. Various changes in the details of the construction and shape of the elements of the preferred embodiment may be made without departing from the spirit of the invention.

| Reference list | |
|---|---|
| 10 | edge protector |
| 12 | bumper portion |
| 14 | planar section |
| 16 | mid-section |
| α | angle |
| 18 | door |
| 20 | nose |
| 22 | edge |
| 24 | gap |

## Claims

1. An edge protector of polymeric material for removable installation on a vehicle door, said edge protector comprising:
- a bumper section,
- a planar section comprising means to removably install said protector on said edge of a vehicle door and
- a flexible mid-section between said bumper section and planar section,
- said mid-section maintaining the bumper section and the planar section at an angle α which is between 160° and 100°.

2. The edge protector of claim 1, wherein said means to removably install said protector on said edge of said vehicle door comprise an adhesive material.

3. The edge protector of claim 1, wherein said means to removably install said protector on said edge of said vehicle door comprise a double backed adhesive tape or a simple adhesive tape which has been fixed to said protector by a hot melt type of adhesive.

4. The edge protector of claim 1, wherein the bumper section comprises a nose.

5. The edge protector of claim 1, wherein said polymeric material is chosen from the group consisting of polyurethane, polytherephthlate, polyvinylchloride, polystyrene, polyolefines, their copolymers and mixtures thereof.

6. The edge protector of claim 1, wherein said polymeric material comprises low-density polyethylene foam.
